(19) Europäisches Patentamt
European Patent Office
Office européen des brevets

(11) **EP 4 235 454 A1**

(12) **EUROPEAN PATENT APPLICATION**
published in accordance with Art. 153(4) EPC

(43) Date of publication:
**30.08.2023 Bulletin 2023/35**

(21) Application number: **21884714.3**

(22) Date of filing: **02.09.2021**

(51) International Patent Classification (IPC):
**G06F 16/27** (2019.01)        **G06F 16/2458** (2019.01)

(52) Cooperative Patent Classification (CPC):
**G06F 16/2458; G06F 16/27**

(86) International application number:
**PCT/CN2021/116314**

(87) International publication number:
**WO 2022/088983 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2020 CN 202011191197**

(71) Applicant: **Huawei Technologies Co., Ltd.
Shenzhen, Guangdong 518129 (CN)**

(72) Inventors:
• **WANG, Bintian
  Shenzhen, Guangdong 518129 (CN)**
• **HAN, Feng
  Shenzhen, Guangdong 518129 (CN)**
• **WANG, Tao
  Shenzhen, Guangdong 518129 (CN)**

(74) Representative: **Huawei European IPR
Huawei Technologies Duesseldorf GmbH
Riesstraße 25
80992 München (DE)**

(54) **DATA MANAGEMENT METHOD AND APPARATUS**

(57)    A data management method is provided, and relates to the field of computer technologies, to resolve a problem that hot data sharing between a plurality of devices cannot be intelligently implemented in the conventional technology. The method includes: obtaining a hot data set (301), where the hot data set includes hot data statistics information of at least one terminal device; performing data affinity classification on the hot data set, to obtain a hot data subset corresponding to each of the at least one terminal device (302); and storing, into a first terminal, hot data in a first hot data subset other than hot data that has been stored in the first terminal (303), where the first hot data subset is a hot data subset corresponding to the first terminal.

FIG. 3

## Description

This application claims priority to Chinese Patent Application No. 202011191197.3, filed with the China National Intellectual Property Administration on October 30, 2020 and entitled "DATA MANAGEMENT METHOD AND APPARATUS", which is incorporated herein by reference in its entirety.

## TECHNICAL FIELD

This application relates to the field of computer technologies, and in particular, to a data management method and apparatus.

## BACKGROUND

As a quantity and types of terminal devices used by a user increase, sharing of user data between a plurality of terminal devices, especially sharing of hot data frequently accessed by the user, becomes one of requirements that need to be urgently met currently. For example, after the user edits a document by using a terminal device A (a mobile phone), the user needs to operate a terminal device B (a notebook computer) or a terminal device C (a tablet computer) to continue to edit the document. In this case, the document finally saved by the user on the terminal device A needs to be shared with the terminal device B, to implement hot data sharing between a plurality of devices.

Currently, data sharing between terminal devices may be implemented through cloud sharing, end-to-end data transmission, or the like. Specifically, cloud sharing means that after a device uploads data to a cloud (which may be a server that provides a cloud service), the cloud collects statistics about hot degrees of different data (for example, based on data access frequencies), and downloads a part of relatively hot data to another device, to implement data sharing between a plurality of terminal devices. However, in the foregoing implementation, cold/hot data identification is performed on data in the cloud rather than data on different terminal devices. Therefore, there is a difference between hot degrees of data in the cloud (or a cloud disk) and usage experience of the user on a specific device. In addition, end-to-end data transmission means that the user selects a required file for transmission. Although data sharing may be performed based on user selection, the user needs to perform a manual operation. Consequently, hot data sharing between a plurality of devices cannot be automatically implemented, and intelligence and user experience are relatively poor.

## SUMMARY

This application provides a data management method and apparatus, to resolve a problem that hot data sharing between a plurality of devices cannot be intelligently implemented in the conventional technology.

To achieve the foregoing objective, this application uses the following technical solutions.

According to a first aspect, a data management method is provided, and the method is applied to an electronic device. The method includes: obtaining a hot data set, where the hot data set includes hot data statistics information of at least one terminal device; performing data affinity classification on the hot data set, to obtain a hot data subset corresponding to each of the at least one terminal device; and storing, into a first terminal, hot data in a first hot data subset other than hot data that has been stored in the first terminal, where the first hot data subset is a hot data subset corresponding to the first terminal.

According to the foregoing technical solution, the electronic device may obtain hot data statistics information of a same user on at least one terminal device, and perform affinity classification on hot data of the user for different devices, to obtain a hot data subset that is suitable for processing by each terminal device, so that data that is in a hot data set corresponding to the device and that is deployed on the device can be synchronized, to implement cross-device data synchronization and sharing. After the user switches from another device to the device, the user can continue to access or edit, on the device, data or a file that is previously processed on the another device. This improves user experience.

In a possible implementation, the obtaining a hot data set specifically includes: obtaining, through hot data identification and extraction processing, hot data statistics information corresponding to the first terminal, where the hot data set includes the hot data statistics information corresponding to the first terminal.

According to the foregoing possible implementation, the hot data set may include the hot data statistics information corresponding to the first terminal. When a first device is the first terminal, the first terminal may obtain the hot data statistics information on the first terminal by using a hot data identification technology and a hot data extraction technology, so that the hot data on the first terminal can be subsequently shared, across devices, with another terminal device that can process the hot data. This implements hot data sharing between devices, improves flexibility and intelligence of data sharing, and improves user experience.

In a possible implementation, the obtaining a hot data set further specifically includes: receiving hot data statistics information corresponding to a second terminal, where the hot data set includes the hot data statistics information corresponding to the second terminal.

According to the foregoing possible implementation, the electronic device further needs to obtain hot data statistics information of the same user that is from a plurality of other devices, to obtain a hot data set through summarization, so that cross-device data sharing can be implemented for all hot data that is stored by the user in a distributed manner. This improves flexibility and real-time performance of data sharing, and can increase storage space utilization of user equipment.

In a possible implementation, the performing data affinity classification on the hot data set, to obtain a hot data subset corresponding to each of the at least one terminal device specifically includes: performing, for the first terminal, affinity classification on a plurality of hot data types included in the hot data set, to obtain a hot data type supported by the first terminal; and performing screening in the hot data set based on the hot data type supported by the first terminal, to obtain the first hot data subset corresponding to the first terminal, where the first hot data subset is a set of hot data that is in the hot data set and that corresponds to the hot data type supported by the first terminal.

According to the foregoing possible implementation, data affinity classification is performed on the hot data set, and screening is performed in the hot data set, so that a hot data subset that can be processed by the terminal device can be obtained. Therefore, accuracy and practicability of data sharing between different devices can be improved, so that the user can access same hot data on different devices. This improves user experience.

In a possible implementation, the performing, for the first terminal, affinity classification on a plurality of data types included in the hot data set, to obtain a hot data type supported by the first terminal specifically includes: determining the plurality of hot data types included in the hot data set; and determining, based on device diagnosis information of the first terminal, the hot data type supported by the first terminal in the plurality of hot data types.

According to the foregoing possible implementation, the hot data type supported by the first terminal may be determined based on the device diagnosis information of the first terminal. This improves accuracy of hot data classification, and ensures that the terminal device processes or edits hot data synchronized by another device.

In a possible implementation, the device diagnosis information includes at least one of device registration information of the first terminal, information about an installed application, or information about an updated application.

According to the foregoing possible implementation, a hardware capability of the device is obtained based on initial registration information of the device, to determine a data processing capability of the device. In addition, an application installed or updated by the user is scanned in real time, so that a hot data type that can be processed by the device can be updated in time. In this way, a more accurate result is obtained during data affinity classification, and accuracy and convenience of cross-device hot data synchronization are improved.

In a possible implementation, the performing data affinity classification on the hot data set, to obtain a hot data subset corresponding to each of the at least one terminal device specifically includes: determining a plurality of hot data types included in the hot data set; receiving a hot data type supported by the second terminal, or obtaining, based on device diagnosis information received from the second terminal device, a hot data type supported by the second terminal; and performing screening in the hot data set based on the hot data type supported by the second terminal, to obtain a second hot data subset corresponding to the second terminal, where the second hot data subset is a set of hot data that is in the hot data set and that corresponds to the hot data type supported by the second terminal.

According to the foregoing possible implementation, the electronic device further needs to obtain a hot data type supported by another terminal device, or may obtain, by receiving device diagnosis information sent by another terminal device, a hot data type supported by the device, to perform data affinity classification to obtain a hot data subset that can be processed by the another terminal device, and perform cross-device data synchronization.

In a possible implementation, the storing, into a first terminal, hot data in a first hot data subset other than hot data that has been stored in the first terminal specifically includes: excluding hot data that has been locally stored in the first terminal from the first hot data subset to obtain a target hot data subset, where the target hot data subset includes at least one piece of target hot data; and storing the at least one piece of target hot data into the first terminal based on a storage address that is of the at least one piece of target hot data and that is indicated in the hot data set.

According to the foregoing possible implementation, the electronic device needs to store, into a terminal device, only all or a part of hot data that is from another terminal device and that is included in a hot data subset corresponding to the local device, to implement cross-device hot data synchronization.

In a possible implementation, the storing the at least one piece of target hot data into the first terminal based on a storage address that is of the at least one piece of target hot data and that is indicated in the hot data set specifically includes: storing a part of target hot data in the target hot data subset into the first terminal based on a storage capability of the first terminal and a hot data priority.

According to the foregoing possible implementation, considering a limitation of a storage space of the terminal device, when implementing cross-device hot data synchronization, the electronic device may choose, based on the storage space configured for the terminal device, to store a part of hot data with a relatively high priority, to implement cross-device synchronization and increase storage space utilization of the terminal device. This improves flexibility and intelligence.

In a possible implementation, the electronic device is the first terminal, or the electronic device is a gateway device or a network storage device.

According to the foregoing possible implementation, the electronic device may be a gateway device or a network storage device. Hot data of the user is stored in a distributed manner, and management and cross-device synchronization of the hot data are implemented on the gateway device or a home storage center. This increases storage space utilization of the user equipment and improves user experience.

According to a second aspect, a data management apparatus is provided. The apparatus includes: a hot data extraction module, configured to obtain a hot data set, where the hot data set includes hot data statistics information of at least one terminal device; a data affinity classification module, configured to perform data affinity classification on the hot data set, to obtain a hot data subset corresponding to each of the at least one terminal device; and a cross-device data synchronization module, configured to store, into a first terminal, hot data in a first hot data subset other than hot data that has been stored in the first terminal, where the first hot data subset is a hot data subset corresponding to the first terminal.

In a possible implementation, the hot data extraction module is specifically configured to obtain, through hot data identification and extraction processing, hot data statistics information corresponding to the first terminal, where the hot data set includes the hot data statistics information corresponding to the first terminal.

In a possible implementation, the hot data extraction module is further specifically configured to receive hot data statistics information corresponding to a second terminal, where the hot data set includes the hot data statistics information corresponding to the second terminal.

In a possible implementation, the data affinity classification module is specifically configured to: perform, for the first terminal, affinity classification on a plurality of hot data types included in the hot data set, to obtain a hot data type supported by the first terminal; and perform screening in the hot data set based on the hot data type supported by the first terminal, to obtain the first hot data subset corresponding to the first terminal, where the first hot data subset is a set of hot data that is in the hot data set and that corresponds to the hot data type supported by the first terminal.

In a possible implementation, the data affinity classification module is specifically configured to: determine the plurality of hot data types included in the hot data set; and determine, based on device diagnosis information of the first terminal, the hot data type supported by the first terminal in the plurality of hot data types.

In a possible implementation, the device diagnosis information includes at least one of device registration information of the first terminal, information about an installed application, or information about an updated application.

In a possible implementation, the data affinity classification module is specifically configured to: determine a plurality of hot data types included in the hot data set; receive a hot data type supported by the second terminal, or obtain, based on device diagnosis information received from the second terminal device, a hot data type supported by the second terminal; and perform screening in the hot data set based on the hot data type supported by the second terminal, to obtain a second hot data subset corresponding to the second terminal, where the second hot data subset is a set of hot data that is in the hot data set and that corresponds to the hot data type supported by the second terminal.

In a possible implementation, the cross-device data synchronization module is specifically configured to: exclude hot data that has been locally stored in the first terminal from the first hot data subset to obtain a target hot data subset, where the target hot data subset includes at least one piece of target hot data; and store the at least one piece of target hot data into the first terminal based on a storage address that is of the at least one piece of target hot data and that is indicated in the hot data set.

In a possible implementation, the cross-device data synchronization module is specifically configured to store a part of target hot data in the target hot data subset into the first terminal based on a storage capability of the first terminal and a hot data priority.

According to a third aspect, an electronic device is provided. The electronic device includes a processor. The processor is coupled to a memory. The memory is configured to store a computer program or instructions. The processor is configured to execute the computer program or the instructions stored in the memory, so that the electronic device performs the method according to any one of the implementations of the first aspect.

According to a fourth aspect, a computer-readable storage medium is provided, and includes a program or instructions. When the program or the instructions is or are run by a processor, the method according to any one of the implementations of the first aspect is performed.

According to a fifth aspect, a computer program product is provided. When the computer program product is run on a computer, the computer is enabled to perform any one of the possible implementations of the first aspect.

It should be understood that the data management method and apparatus, the computer-readable storage medium, or the computer program product provided above may be implemented by using the corresponding method provided above. Therefore, for beneficial effects that can be achieved by the data management method and apparatus, the computer-readable storage medium, or the computer program product, refer to the beneficial effects in the corresponding method provided above. Details are not described herein again.

## BRIEF DESCRIPTION OF DRAWINGS

FIG. 1 is a schematic diagram of a structure of a communication system according to an embodiment of this application;

FIG. 2 is a diagram of a hardware structure of a terminal device according to an embodiment of this application;

FIG. 3 is a schematic flowchart of a data management method according to an embodiment of this application;

FIG. 4 is a schematic flowchart of generating a data set in a data management method according to an embodiment of this application;

FIG. 5 is a schematic diagram of implementing data sharing between a plurality of devices by using a data management method according to an embodiment of this application;

FIG. 6 is a schematic flowchart of another data management method according to an embodiment of this application;

FIG. 7 is a schematic diagram of a structure of a data management apparatus according to an embodiment of this application; and

FIG. 8 is a schematic diagram of a structure of an electronic device according to an embodiment of this application.

## DESCRIPTION OF EMBODIMENTS

In the following, the terms "first" and "second" are used merely for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

It should be noted that, in this application, the word such as "example" or "for example" is used for representing giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

The following clearly and completely describes the technical solutions in embodiments of this application with reference to the accompanying drawings in embodiments of this application. It is clear that the described embodiments are merely a part but not all of embodiments of this application. All other embodiments obtained by a person of ordinary skill in the art based on embodiments of this application without creative efforts shall fall within the protection scope of this application.

First, an implementation environment of embodiments of this application is briefly described.

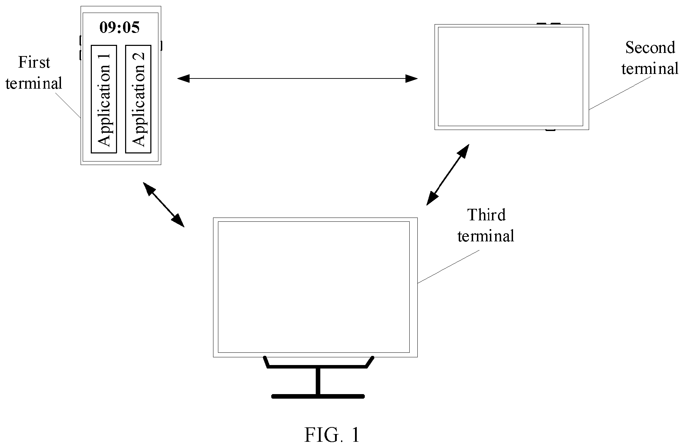

FIG. 1 is a schematic diagram of a structure of a communication system according to an embodiment of this application. The communication system may include at least two terminal devices: a first terminal and a second terminal. The at least two terminal devices may communicate with each other and perform data transmission. For example, the at least two terminal devices may implement communication and transmission by using a Bluetooth or near field communication (Near Field Communication, NFC) technology, or by connecting to a same wireless network.

In FIG. 1, only an example in which the first terminal is a smartphone, the second terminal is a tablet computer, and a third terminal is a smart television is used for description.

The terminal device is any device, apparatus, or machine that has a computing and processing capability, and in embodiments of this application, may be a terminal device that has a data processing capability or a functional peripheral. Specifically, the terminal device may be a smartphone, a personal computer (Personal Computer, PC), a tablet computer, a smart television, or another desktop, laptop, wearable, or handheld device, for example, an ultra-mobile personal computer (Ultra-mobile Personal Computer, UMPC), a netbook, a personal digital assistant (Personal Digital Assistant, PDA), a smart camera, a smart speaker, or smart earphones. The terminal device may alternatively include a single-function hardware device, that is, extended hardware to which a conventional PC can be directly and communicatively connected through a driver, a data cable, or a wireless network Wi-Fi. The terminal device may be used as an independent functional peripheral, or may be used as an extended hardware device that is used for extending a function of a general-purpose intelligent device, for example, a smart camera, a smart speaker, or a printer. In FIG. 1, a functional peripheral of the smartphone may include a camera, a display, a loudspeaker, and a microphone; a functional peripheral of the PC may include a speaker and a display; and a functional peripheral of the smart television may include a display and a speaker.

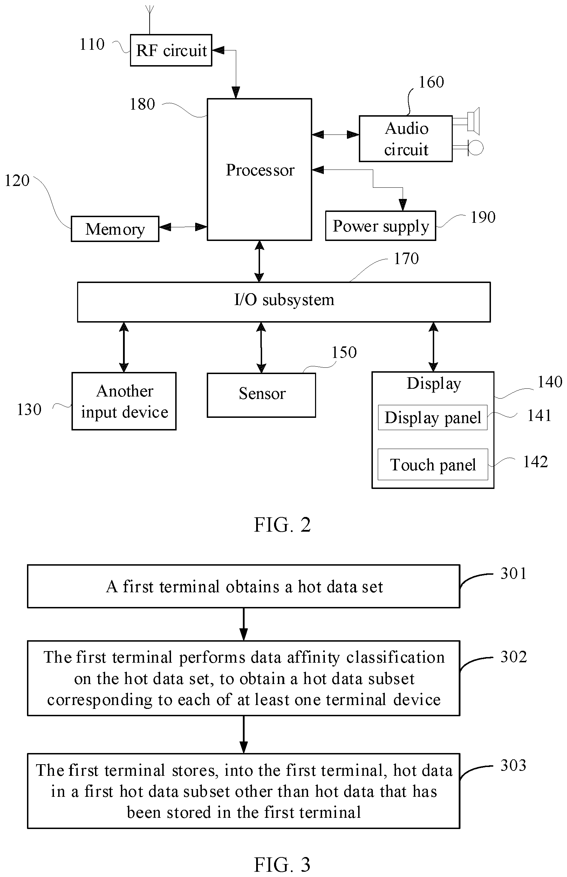

A hardware structure of the terminal device in the foregoing communication system may be shown in FIG. 2. In FIG. 2, only an example in which the terminal device is a smartphone is used for describing the structure of the terminal device.

Refer to FIG. 2. The terminal device may include components such as an RF (radio frequency, radio frequency) circuit 110, a memory 120, another input device 130, a display 140, a sensor 150, an audio circuit 160, an input/output (input/output, I/O) subsystem 170, a processor 180, and a power supply 190. The processor 180 is connected to each of the RF circuit 110, the memory 120, the audio circuit 160, and the power supply 190. The I/O subsystem 170 is connected to each of the another input device 130, the display 140, and the sensor 150.

The RF circuit 110 may be configured to receive and send information or receive and send a signal during a call. Generally, the RF circuit 110 includes but is not limited to an antenna, an amplifier, a transceiver, a coupler, an LNA (low noise amplifier, low noise amplifier), a duplexer, and the like. In addition, the RF circuit 110 may further communicate with a network and another device through wireless communication, for example, communicate with a device in the network through a Wi-Fi network.

The memory 120 may be configured to store data, a software program, and a module, and mainly includes a program storage area and a data storage area. The program storage area may store an operating system, an application required by at least one function, and the like. The data storage area may store data created when a data processing apparatus is used, and the like. In this embodiment of this application, the operating system may include a general-purpose operating system (for example, an Android system) and a distributed operating system. The application required by the at least one function may include web browsing software, video playing software, audio playing software, payment software, and the like that are based on the Android system. The data stored in the data storage area may include video data, audio data, image data, and the like. In addition, the memory 120 may include a high-speed random access memory, or may include a nonvolatile memory, such as at least one magnetic disk storage device, a flash memory, or another volatile solid-state storage device.

The another input device 130 may be configured to receive input digital or character information, and generate a button signal input related to user settings and function control of the mobile phone. The another input device 130 may include but is not limited to one or more of a physical keyboard, a function button (for example, a volume control button or a power on/off button), a trackball, a mouse, a joystick, and the like.

The display 140 may be configured to display information input by a user or information provided for a user, and various menus of the mobile phone, and may further receive a user input. The display 140 may include a display panel 141 and a touch panel 142. In this embodiment of this application, the display panel 141 in the display 140 may be disposed in a form of an OLED. For example, the display panel 141 may include an OLED array, and the OLED array includes a plurality of rows and columns of OLEDs.

The sensor 150 includes one or more sensors, and is configured to provide status evaluation in various aspects for the mobile phone. In a possible implementation, the sensor 150 may include a temperature sensor, an acceleration sensor, a gyro sensor, a magnetic sensor, or a pressure sensor. The sensor 150 may detect a temperature change of the mobile phone, acceleration/deceleration of the mobile phone, an orientation of the mobile phone, an on/off state of the mobile phone, relative positioning of a component, or the like. In addition, the sensor 150 may further include a CMOS or CCD image sensor, or the like, used in an imaging application.

The audio circuit 160 may provide an audio interface between the user and the mobile phone. For example, the audio circuit 160 provides the audio interface between the user and the mobile phone by using the loudspeaker and the microphone. The audio circuit 160 may transmit, to the loudspeaker, an electrical signal converted from received audio data, and the loudspeaker converts the electrical signal into a sound signal for output. On the other hand, the microphone converts a collected sound signal into an electrical signal. The audio circuit receives the electrical signal, converts the electrical signal into audio data, and then outputs the audio data to the RF circuit 110 to send the audio data to, for example, another mobile phone, or outputs the audio data to the memory 120 for further processing.

The I/O subsystem 170 is configured to control an external input/output device, and the external device may include another input device controller, a sensor controller, a display controller, and the like.

The processor 180 is a control center of the mobile phone, and is connected to all parts of the entire mobile phone through various interfaces and lines. By running or executing the software program and/or the module stored in the memory 120 and invoking data stored in the memory 120, the processor 180 performs various functions of the mobile phone and data processing, to perform overall monitoring on the mobile phone. Optionally, the processor 180 may include one or more processing units. For example, the processor 180 may integrate an application processor (Application Processor, AP) and a modem (modem) processor. The application processor mainly processes an operating system, a user interface, an application, and the like. The modem processor mainly processes wireless communication. It may be understood that the foregoing modem processor may be not integrated into the processor 180.

The power supply 190 (for example, a battery) is configured to supply power to the foregoing components. The power supply may be logically connected to the processor 180 through a power management system, to implement functions such as charging and discharging management and power consumption management by using the power management system.

A person skilled in the art may understand that the structure of the terminal device shown in FIG. 2 does not constitute a limitation. More or fewer components than those shown in the figure may be included, or some components are combined, or different component arrangements are used.

Based on the foregoing communication structure, this application provides a data management method. Hot data identification and hot data extraction are performed on a plurality of terminal devices of a user, and then a part of hot files required by the user are shared between the plurality of terminal devices in advance based on affinity analysis of hot data in different formats corresponding to different terminal devices. This improves convenience and flexibility of data management, reduces storage pressure of a device, and improves user experience.

It may be understood that a same step or a step or a message having a same function in embodiments of this application may be mutually referenced in different embodiments.

An embodiment of this application provides a data management method, applied to a first terminal. As shown in FIG. 3, the method may include the following steps.

301: The first terminal obtains a hot data set.

The hot data set includes hot data statistics information of at least one terminal device. The at least one terminal device may include the first terminal, and may further include a second terminal and the like.

Hot data is data or a file that is frequently accessed or edited by a user on a terminal device. A type of the hot data may be a picture, audio, a video, a document, a file, an engineering file, buffered data of an application, or the like. The hot data may also be referred to as hot spot data. Correspondingly, data or a file that is infrequently accessed or edited by the user on the terminal device may be referred to as cold data.

The hot data statistics information may include metadata corresponding to the hot data. The metadata is data used for describing data, and is mainly information used for describing a data attribute, for example, a type, a size, and a last modification time of the data. The hot data statistics information may further include a data name or a file name of the data, a complete storage path of the data, and the like. In addition, the hot data statistics information may further include information indicating historical data, resource search, or a file record of the data.

The first terminal may specifically obtain the hot data set in the following two manners.

1. Obtain, through hot data identification and extraction processing, hot data statistics information corresponding to the first terminal, where the hot data set includes the hot data statistics information corresponding to the first terminal.

Which data on the terminal device belongs to hot data may be first identified by using a hot data identification technology, and then statistics information of the hot data is extracted through hot data extraction processing.

For example, identification of hot data on the terminal device may be performed by collecting statistics about data based on a user operation behavior. For example, the identification is implemented by counting a quantity of times that the user accesses or edits data within a specific time period (for example, a week or 15 days) and that exceeds a specific threshold or ranks top, so that hot data of the user in this time period is identified. Specifically, the quantity of times may be a quantity of times that the user opens, closes, or edits the data. In addition, hot data identification may alternatively be implemented by using another technology. For details, refer to a related description of an existing hot data identification technology. This is not specifically limited in this application.

2. Receive hot data statistics information corresponding to the second terminal, where the hot data set includes the hot data statistics information corresponding to the second terminal.

Based on the communication system shown in FIG. 1, the at least one terminal device may communicate with each other, and the hot data set may include statistics information of hot data on all terminal devices in the communication system. For example, the communication system may further include the second terminal, and the first terminal and the second terminal may communicate with each other. Therefore, the hot data set may include the hot data statistics information corresponding to the first terminal and the hot data statistics information corresponding to the second terminal.

For example, in this embodiment of this application, the second terminal may send, to the first terminal, the hot data statistics information of the second terminal that is obtained by the second terminal by using a hot data identification technology and a hot data extraction technology. After receiving the hot data statistics information corresponding to the second terminal, the first terminal may combine the hot data statistics information corresponding to the second terminal with the hot data statistics information corresponding to the first terminal, to obtain the hot data set.

In this embodiment of this application, a hot data identification module may be configured on the at least one terminal device, and is configured to identify local user hot data of the terminal device, so that hot data statistics information may be obtained by using a statistics collection module.

In this embodiment of this application, the hot data specifically refers to data that can be used by the user between a plurality of terminal devices. For example, the first terminal is a mobile phone, and the hot data may mainly refer to media data, an office document, or network data, for example, an audio or video file or progress information of listening to audio or watching a video, a picture file or a document file, or network data such as information about a unified resource locator (Uniform Resource Locator, URL) system visited by a browser for a last time. If the terminal device is a smart speaker, hot data may be concentrated in an audio file. If the terminal device is a smart television, a hot file may be concentrated in a video file, a picture, or the like. For example, the hot data may include data types shown in the following Table 1.

**Table 1 Examples of hot data types**

| Data classification | Examples of hot data types |
|---|---|
| Document file | Doc, pptx, xlsx, pdf, or the like |
| Audio and video, or an image | mp4, avi, mov, mpeg, rm, mp3, wav, jpg, bmp, gif, psd, or the like |
| Network data | URL address, a website user name, a password, a key string, or the like |
| Motion data or location | FIT (Flexible and interoperable data transfer), TCX (Training Center Database File), |
| data of a user | KML (Keyhole Markup Language), CSV (Comma-Separated Values), GPX (GPS Exchange Format), or the like |
| Professional field data | Java, C++, or C language program code, engineering field file dwg file, or the like |

302: The first terminal performs data affinity classification on the hot data set, to obtain a hot data subset corresponding to each of the at least one terminal device.

Data affinity refers to a similarity or a matching degree between samples, and may include a similarity between data or a matching degree between data and a device. The matching degree between data and a device may indicate whether the data type is suitable for accessing or editing on the device, or whether the terminal device has a capability of processing the data type. Data affinity in embodiments of this application is mainly used for indicating affinity between the data and the terminal device.

In an implementation, step 302 in which the first terminal performs data affinity classification on the hot data set, to obtain a hot data subset corresponding to each terminal device may specifically include the following steps.

Step 1: Perform, for the at least one terminal device, affinity classification on a plurality of data types included in the hot data set, to obtain a hot data type supported by each of the at least one terminal device.

For example, the first terminal may screen out a hot data type that is in all data types in the hot data set and that can be processed by the first terminal, to obtain the hot data type supported by the first terminal. The hot data type is used for representing the hot data type that can be processed by the first terminal.

In addition, the first terminal may further determine, based on a message from another terminal device in the communication system, a hot data type that can be processed by the another terminal device, for example, obtain a hot data type supported by the second terminal.

Specifically, the first terminal may perform data affinity classification on the hot data set to obtain a data affinity table of the at least one terminal device. For example, the communication system may include five terminal devices of a same user: a mobile phone, a smart television, a tablet computer, a smartwatch, and a smart speaker. The first terminal may obtain a data affinity table, as shown in Table 2, based on a data processing capability of each terminal and hot data types included in the hot data set.

**Table 2 Data affinity table**

| Terminal device | Hot data type |
|---|---|
| First terminal: the mobile phone | Document (Doc, pptx, xlsx, pdf, or the like), media (mp4, avi, mp3, jpg, bmp, or the like), and network data such as a URL address |
| Terminal device | Hot data type |
| Second terminal: the smart television | Media (mp4, avi, mov, mpeg, rm, mp3, wav, jpg, bmp, gif, psd, or the like) |
| Third terminal: the tablet computer | Document (Doc, pptx, xlsx, pdf, or the like), media (mp4, avi, mp3, jpg, bmp, or the like), and network data such as a URL address |
| Fourth terminal: the smartwatch | Motion data or location data: FIT (Flexible and interoperable data transfer), TCX (Training Center Database File), KML (Keyhole Markup Language), CSV (Comma-Separated Values), GPX (GPS Exchange Format), or the like |
| Fifth terminal: the smart speaker | Audio (mp3, wav, or the like) |

In an implementation, the at least one terminal device, for example, the first terminal, may specifically obtain, based on device diagnosis information, the hot data type supported by the terminal device, to obtain the data affinity table. The device diagnosis information is used for indicating a data processing capability of the terminal device.

The first terminal is used as an example. The performing, for the first terminal, affinity classification on a plurality of data types included in the hot data set, to obtain a hot data type supported by the first terminal may specifically include as follows:

First, the plurality of data types included in the hot data set are determined.

Then, the hot data type supported by the first terminal in the plurality of data types is determined based on the device diagnosis information of the first terminal.

Specifically, the device diagnosis information may include at least one piece of information of: device registration information of the terminal device, information about an installed application, information about an updated application, and the like. Specifically, the following may be included.

1. A hardware capability of the terminal device may be obtained based on the registration information of the terminal device, to determine a data processing type and a basic capability based on the hardware capability of the terminal device.

The registration information of the terminal device is registration information generated when the user activates the terminal device after purchasing the device, or registration information generated when the user uses the terminal device for the first time.

For example, if the second terminal is the smartwatch, a size of a display of the second terminal may be obtained based on registration information of the second terminal. In this case, it may be determined that the size of the display and resolution of the second terminal do not meet a requirement of the user for processing document-type data. Therefore, it may be determined that the second terminal does not have a capability of processing document-type data.

2. A data processing type supported by the terminal device is obtained by scanning an application installed on the terminal device.

An application installed in a system may be scanned to determine a type of a file or data that can be processed by the terminal device. For example, if it is found, through scanning, that a web browser is installed on the terminal device, it is determined that the terminal device can process web URL data. Alternatively, if it is found, through scanning, that a video player is installed on the terminal device, it is determined that the terminal device can process a part of media-type data.

3. The data type supported by the terminal device and the data processing capability of the terminal device may be further actively updated by determining, through scanning, whether an application of the terminal device is updated.

For example, when the user installs a new application, the terminal device may trigger this step to update the data type supported by the terminal device.

For example, after determining that the user installs a pdf reader, the first terminal determines that the first terminal has a capability of accessing a pdf document, that is, updates the data type supported by the first terminal.

According to the foregoing three steps, final information of data affinity of the terminal device, that is, a hot data type supported by the terminal device, may be summarized, that is, a type of hot data that can be processed and accessed on the terminal device may be indicated.

Step 2: Perform screening in the hot data set based on the hot data type supported by each terminal device, to obtain the hot data subset corresponding to the terminal device.

Specifically, the first terminal extracts, from the hot data set based on the hot data type corresponding to each terminal device, all hot data corresponding to the hot data type, to generate the hot data subset corresponding to the terminal device.

For example, the first hot data subset corresponding to the first terminal is obtained by performing screening in the hot data set based on the hot data type supported by the first terminal. The first hot data subset is a set of hot data that is in the hot data set and that corresponds to the hot data type supported by the first terminal. In addition, a second hot data subset corresponding to the second terminal may be further obtained by performing screening in the hot data set based on the hot data type supported by the second terminal. The second hot data subset is a set of hot data that is in the hot data set and that corresponds to the hot data type supported by the second terminal.

Specifically, the hot data subset is determined based on the foregoing obtained data affinity table. The first terminal recombines hot data in the hot data set based on data affinity of each device, and adapts recombined hot data to the terminal device.

For example, the hot data set is S, and the first hot data subset $S_n'$ may be obtained according to the following function:

$S_n'$ = Select (DeviceID, HotFileAffinity_Table, S), where DeviceID is used for representing a device identifier of the first terminal, and HotFileAffinity_Table is used for representing a data device affinity table corresponding to the first terminal device.

The foregoing function may be specifically implemented by using a table lookup and screening method. To be specific, the first terminal traverses each file in the hot data set S, and queries the data device affinity table HotFileAffinity_Table based on the device identifier (DeviceID) of the first terminal. If a piece of data is in the data device affinity table corresponding to the first terminal, it is determined that the data is suitable for running on the first terminal, and the data is reserved. That is, the data is a member of the first hot data subset $S_n'$. If a piece of data is not in the data device affinity table corresponding to the first terminal, it is determined that the data is not suitable for running on the first terminal, and the data is deleted. That is, the data is not a member of the first hot data subset $S_n'$. In this way, a hot data subset suitable for using on the first terminal, that is, the first hot data subset $S_n'$, that is, a return value of the function, can be obtained through separation.

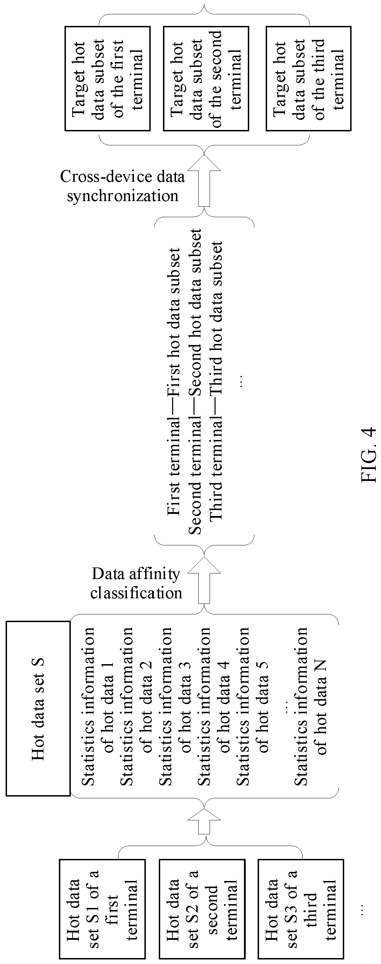

In a same manner, the first terminal may further obtain, through screening, hot data subsets corresponding to the second terminal, the third terminal, and the like, that is, the second hot data subset, a third hot data subset, and the like, as shown in FIG. 4.

In an implementation, the first terminal may further receive a data affinity table corresponding to another terminal device or a hot data type supported by another terminal device that is sent by the terminal device. In this case, the first terminal may obtain a data affinity table of the plurality of terminal devices of the user through summarization.

In another implementation, the first terminal may further receive device diagnosis information that corresponds to another terminal device and that is sent by the terminal device. In this case, the first terminal may determine, based on the device diagnosis information, a hot data type supported by the terminal device, and then obtain a data affinity table of the plurality of terminal devices of the user through summarization. In other words, in the plurality of terminal devices in the communication system, one terminal device may have a data affinity classification function, or the plurality of terminal devices each may have a data affinity classification function. This is not specifically limited in this application.

303: The first terminal stores, into the first terminal, hot data in the first hot data subset other than hot data that has been stored in the first terminal.

The first hot data subset is a hot data subset corresponding to the first terminal, that is, a set of hot data that is in the hot data set determined in step 301 and that can be processed by the first terminal. The hot data in the first hot data subset other than the hot data that has been stored in the first terminal is hot data of the user on another terminal device.

Specifically, the first terminal may first exclude a part of hot data that has been locally stored from the first hot data subset, and then locally synchronize remaining hot data to the first terminal across devices based on an access path corresponding to each piece of hot data.

In an implementation, that the first terminal stores, into the first terminal, hot data in the first hot data subset other than hot data that has been stored in the first terminal may specifically include as follows:

First, the first terminal excludes data that has been locally stored in the first terminal from the first hot data subset to obtain a target hot data subset, where the target hot data subset includes at least one piece of target hot data.

Then, the first terminal stores the at least one piece of target hot data into the first terminal based on a storage address that is of the at least one piece of target hot data and that is indicated in the hot data set.

For example, with reference to the example in step 302, the first hot data subset obtained by the first terminal through screening includes a part of hot data that already exists on the first terminal. Therefore, the hot data that has been stored in the first terminal further needs to be excluded from the first hot data subset according to the following filtering function, to obtain and store non-local hot data of the first terminal.

$$X_n = \text{Filter (DeviceID, } S_n, S_n', \text{K).}$$

$X_n$ represents the target hot data set that needs to be stored by the first terminal, $S_n'$ represents the first hot data subset that is in the hot data set S and that corresponds to the first terminal, $S_n$ represents a hot data set locally stored in the first terminal, and K represents a configuration parameter.

According to the foregoing filtering function, the first terminal may traverse each piece of hot data in the first hot data subset $S_n'$ to determine whether the hot data exists in the local hot data set $S_n$ of the first terminal. If the hot data exists in $S_n$, the hot data is deleted from $S_n'$. If the hot data does not exist in $S_n$, the hot data is reserved in $S_n'$. In this way, a hot file stored in the first terminal can be stripped from the first hot data subset $S_n'$, and only hot data shared by another terminal device is left, where the hot data is a hot data subset suitable for running on the device.

In an actual implementation process, a storage capability of a terminal device further needs to be considered during hot data sharing between terminal devices. To be specific, when a large quantity of hot data subsets supported by the terminal device requires a relatively large storage space, or a large amount of hot data exists, the storage capability of the terminal device needs to be considered, and a part of hot data with a relatively high hot data priority is selected for storage and sharing.

In an implementation, the first terminal may choose to store a part of target hot data in the target hot data subset into the first terminal based on a storage capability of the first terminal and a hot data priority.

For example, in the foregoing filtering function, the configuration parameter K may be set to a size of a storage space that can be currently used by the first terminal to store hot data shared by another terminal device. K may be specifically represented by a remaining storage space of the first terminal and a configured percentage, that is, K meets x%*F, where F represents the remaining storage space of the first terminal.

For example, when x = 10, it is specified that 10% of a current remaining space of the first terminal is used for storing hot data shared by another terminal device. When x = 0, it indicates that the first terminal stops storing hot data of another terminal device, that is, the target hot data subset $X_n$ corresponding to the first terminal is empty. When K is less than a storage size of hot data that is obtained through screening and whose hot data priority ranks top, a part of hot data in the target hot data subset is selected for sharing across devices, where a sum of storage spaces of the part of hot data needs to be less than or equal to K.

In this way, the target hot data subset $X_n$ that is suitable for storage on the current device and that is shared by another terminal device may be obtained based on different priorities of hot data from the another terminal device, storage size information of the hot data, and a percentage of a current remaining storage space of the first terminal, where $X_n$ may be empty.

According to the foregoing implementation, the user may use distributed data management capabilities of a current plurality of terminal devices to store, into a current device, a hot data subset $X_n$ that is from another device and that is also suitable for using on the current device. After switching from the another device to the current device, the user can continue to access or edit, on the current device, data or a file that is previously processed on the another device. For example, the user can edit a same document on different devices in sequence, the user can continue to browse, by using a browser, content that is last browsed on the another device, or the user can continue to play audio or a video that is played on the another device.

In addition, in an implementation, after step 302, the first terminal performs data affinity classification on the hot data set to obtain the hot data subset corresponding to each terminal device, for example, the first hot data subset corresponding to the first terminal, the second hot data subset corresponding to the second terminal, and the third hot data subset corresponding to the third terminal. In this case, in step 303, the first terminal stores, into the first terminal, hot data that is in the first hot data subset and that is from another terminal device. Similarly, the second terminal may also store, into the second terminal, hot data that is in the second hot data subset and that is from another terminal device, and the third terminal may also store, into the third terminal, hot data that is in the third hot data subset and that is from another terminal device. In this way, real-time hot data sharing between terminal devices is implemented, user experience is improved, and storage space utilization of the device can be increased.

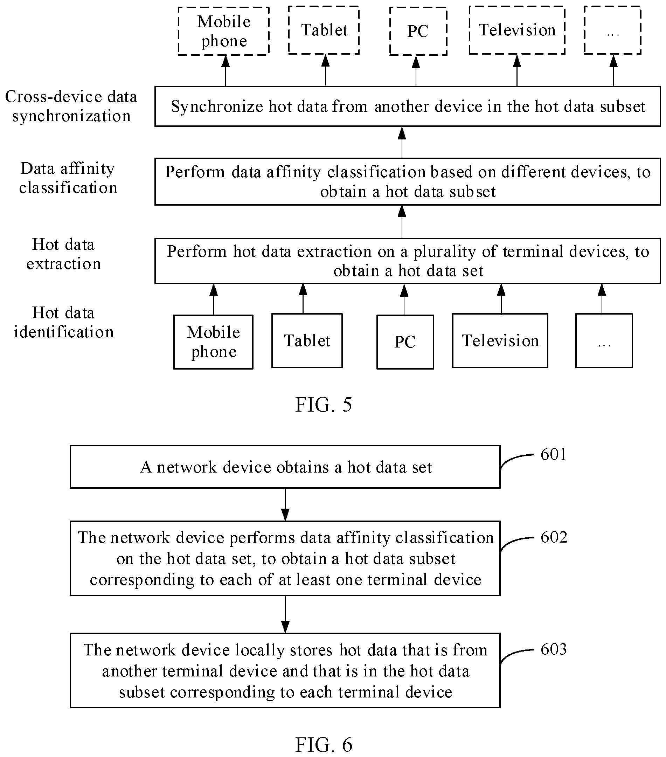

For example, as shown in FIG. 5, a communication network includes a plurality of terminal devices. According to the implementation provided in the foregoing embodiment, data affinity-based hot data sharing may be implemented between the plurality of terminal devices. To be specific, each terminal device may obtain hot data of a user that is stored in another terminal device and that can be processed by the device. Therefore, in a scenario in which the user switches between a plurality of terminal devices, the user can still access or edit shared data, without a limitation of the device.

In an implementation scenario, for example, a plurality of terminal devices of a user and a gateway are used for establishing a home local area network including the plurality of terminal devices. In a communication system of the home network, there is usually a wireless router, and a home storage center may be further configured to store data of each terminal device. In this implementation scenario, affinity classification may be performed on a hot data set of the plurality of terminal devices, to obtain a hot data subset corresponding to each terminal device, so that hot data that can be processed is shared for different terminal devices. In this way, real-time hot data sharing between the plurality of terminal devices is implemented.

An embodiment of this application further provides another data management method, applied to a network device. The network device may be a gateway in the foregoing communication system, or may be a storage center.

As shown in FIG. 6, the method may include the following steps.

601: The network device obtains a hot data set.

The hot data set includes hot data statistics information of at least one terminal device. The at least one terminal device includes a first terminal, a second terminal, and the like.

A specific manner in which the network device obtains the hot data set may be as follows: The network device receives hot data statistics information sent by the at least one terminal device, and summarizes hot data statistics information of a plurality of terminal devices, to obtain the hot data set.

Specifically, the terminal device may obtain the hot data statistics information by performing hot data identification and extraction processing. For details, refer to the related description in step 301 in the foregoing embodiment. Details are not described herein again.

602: The network device performs data affinity classification on the hot data set, to obtain a hot data subset corresponding to each of the at least one terminal device.

Specifically, the following steps may be included.

Step 1: The network device performs, for the at least one terminal device, affinity classification on a plurality of data types included in the hot data set, to obtain a hot data type supported by each of the at least one terminal device.

For example, the network device obtains a hot data type that can be processed by the first terminal device and that corresponds to the first terminal device, and obtains a hot data type that can be processed by the second terminal device and that corresponds to the second terminal device.

Step 2: The network device performs screening in the hot data set based on the hot data type supported by each terminal device, to obtain the hot data subset corresponding to the terminal device.

For example, the network device performs screening in the hot data set based on a hot data type supported by the first terminal, to obtain a first hot data subset corresponding to the first terminal. The network device performs screening in the hot data set based on a hot data type supported by the second terminal, to obtain a second hot data subset corresponding to the second terminal.

For a specific implementation of performing affinity classification and hot data screening to obtain different hot data subsets corresponding to different terminal devices, refer to the related description in the foregoing embodiment. Details are not described herein again.

603: The network device locally stores hot data that is from another terminal device and that is in the hot data subset corresponding to each terminal device.

For example, the network device stores, into the first terminal, hot data in the first hot data subset other than hot data that has been locally stored in the first terminal; and the network device stores, into the second terminal, hot data in the second hot data subset other than hot data that has been locally stored in the second terminal.

Specifically, the network device may store, based on a storage path included in statistics information corresponding to a piece of hot data in the hot data subset, the hot data into a corresponding terminal device.

Specifically, the network device filters out hot data that has been locally stored in at least one terminal device from a hot data subset corresponding to the terminal device, to obtain a target hot data subset of the terminal device. For a detailed process, refer to the related description in the foregoing embodiment. Details are not described herein again.

According to the foregoing implementation, the network device implements distributed data management between different terminal devices. To be specific, the network device performs processing such as hot data extraction, data affinity classification, and hot data cross-device synchronization, so that a data processing task of the terminal device can be reduced, and performance of the terminal device can be improved. In addition, the network device uniformly manages hot data between a plurality of terminal devices, so that real-time hot data sharing between the plurality of terminal devices can be implemented, user experience can be improved, and storage space utilization of the terminal device can be increased.

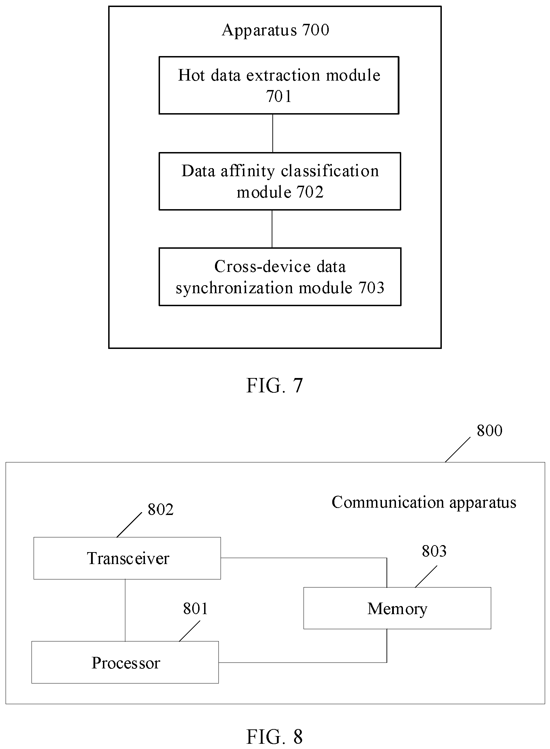

An embodiment of this application further provides a data management apparatus. As shown in FIG. 7, the apparatus 700 includes a hot data extraction module 701, a data affinity classification module 702, and a cross-device data synchronization module 703.

The hot data extraction module 701 is configured to obtain a hot data set, where the hot data set includes hot data statistics information of at least one terminal device.

The data affinity classification module 702 is configured to perform data affinity classification on the hot data set, to obtain a hot data subset corresponding to each of the at least one terminal device.

The cross-device data synchronization module 703 is configured to store, into a first terminal, hot data in a first hot data subset other than hot data that has been stored in the first terminal, where the first hot data subset is a hot data subset corresponding to the first terminal.

In a possible implementation, the hot data extraction module 701 may be specifically configured to obtain, through hot data identification and extraction processing, hot data statistics information corresponding to the first terminal, where the hot data set includes the hot data statistics information corresponding to the first terminal.

In a possible implementation, the hot data extraction module 701 may be further specifically configured to receive hot data statistics information corresponding to a second terminal, where the hot data set includes the hot data statistics information corresponding to the second terminal.

In a possible implementation, the data affinity classification module 702 may be specifically configured to: perform, for the first terminal, affinity classification on a plurality of hot data types included in the hot data set, to obtain a hot data type supported by the first terminal; and perform screening in the hot data set based on the hot data type supported by the first terminal, to obtain the first hot data subset corresponding to the first terminal, where the first hot data subset is a set of hot data that is in the hot data set and that corresponds to the hot data type supported by the first terminal.

In a possible implementation, the data affinity classification module 702 may be further specifically configured to: determine the plurality of hot data types included in the hot data set; and determine, based on device diagnosis information of the first terminal, the hot data type supported by the first terminal in the plurality of hot data types.

In a possible implementation, the device diagnosis information includes at least one of device registration information of the first terminal, information about an installed application, or information about an updated application.

In a possible implementation, the data affinity classification module 702 may be further specifically configured to: determine a plurality of hot data types included in the hot data set; receive a hot data type supported by the second terminal, or obtain, based on device diagnosis information received from the second terminal device, a hot data type supported by the second terminal; and perform screening in the hot data set based on the hot data type supported by the second terminal, to obtain a second hot data subset corresponding to the second terminal, where the second hot data subset is a set of hot data that is in the hot data set and that corresponds to the hot data type supported by the second terminal.

In a possible implementation, the cross-device data synchronization module 703 may be specifically configured to: exclude hot data that has been locally stored in the first terminal from the first hot data subset to obtain a target hot data subset, where the target hot data subset includes at least one piece of target hot data; and store the at least one piece of target hot data into the first terminal based on a storage address that is of the at least one piece of target hot data and that is indicated in the hot data set.

In a possible implementation, the cross-device data synchronization module 703 may be specifically configured to store a part of target hot data in the target hot data subset into the first terminal based on a storage capability of the first terminal and a hot data priority.

In a possible implementation, the apparatus 700 may be configured to perform steps performed by the first terminal in the foregoing embodiment, for example, steps 301 to 303 in the foregoing embodiment. Alternatively, the apparatus 700 may be configured to perform steps performed by the network device in the foregoing embodiment, for example, steps 601 to 603 in the foregoing embodiment.

FIG. 8 is a schematic diagram of another structure of data management (an electronic device) according to an embodiment of this application. As shown in FIG. 8, the electronic device 800 includes a processor 801 and a transceiver 802. Optionally, the electronic device 800 further includes a memory 803. The processor 801, the transceiver 802, and the memory 803 may communicate with each other through an internal connection path, to transfer a control signal and/or a data signal. The memory 803 is configured to store a computer program. The processor 801 is configured to invoke the computer program from the memory 803 and run the computer program, to control the transceiver 802 to receive and send a signal. The electronic device 800 may further include an antenna, configured to send, by using a radio signal, data output by the transceiver 802.

The processor 801 and the memory 803 may be integrated into one processing apparatus. The processor 801 is configured to execute program code stored in the memory 803, to implement the foregoing functions. For example, the processor 801 is configured to implement steps 301 to 303 in the foregoing embodiment, or is configured to perform steps 601 to 603 in the foregoing embodiment. In specific implementation, the memory 803 may alternatively be integrated into the processor 801, or may be independent of the processor 801.

Specifically, the electronic device 800 may correspond to each embodiment of the method according to embodiments of this application. In addition, units in the electronic device 800 and the foregoing other operations and/or functions are separately used for implementing a corresponding procedure in each embodiment of the method.

The processor 801 may be configured to perform one or more execution actions implemented by the terminal device or the network device in the foregoing method embodiments, and the transceiver 802 may be configured to perform one or more sending or receiving actions of the terminal device or the network device in the foregoing method embodiments. For details, refer to the descriptions in the foregoing method embodiments. Details are not described herein again.

Optionally, the electronic device 800 may further include a power supply, configured to supply power to various components or circuits in the electronic device. In addition, to improve functions of the electronic device, the electronic device 800 may further include an input unit, a sensor, a display unit, an audio circuit, a camera, a speaker, a microphone, and the like.

The terminal device in the foregoing apparatus embodiments may completely correspond to the first terminal or the network device in the method embodiments, and a corresponding module or unit performs a corresponding step. For example, when the apparatus is implemented by a chip, the foregoing receiving module may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the foregoing sending module is an interface circuit that is of the chip and that is configured to send a signal to another chip or apparatus.

It should be understood that the processor in embodiments of this application may be a CPU, or the processor may be another general-purpose processor, a digital signal processor (digital signal processor, DSP), an application-specific integrated circuit (application-specific integrated circuit, ASIC), a field programmable gate array (Field Programmable Gate Array, FPGA), or another programmable logic device, a discrete gate or transistor logic device, a discrete hardware component, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. The communication system may include any first terminal and any second terminal provided in the foregoing embodiments of this application, or the communication system may include any first terminal and any network device provided in the foregoing embodiments of this application.

An embodiment of this application further provides a computer-readable medium, configured to store computer program code. The computer program includes instructions used for performing the methods performed by the network device and the terminal device in the foregoing methods. The readable medium may a ROM or a RAM. This is not limited in embodiments of this application.

This application further provides a computer program product. The computer program product includes instructions. When the instructions are executed, the terminal device and the network device are enabled to respectively perform operations corresponding to the terminal device and operations corresponding to the network device in the foregoing methods.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a communication apparatus to which the chip is applied performs operations of the terminal device and operations of the network device in the methods provided in embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in the communication apparatus and that is located outside the chip, for example, a ROM, another type of static storage device that can store static information and instructions, or a RAM. The processor described above may be a CPU, a microprocessor, an ASIC, or one or more integrated circuits configured to control execution of a program for the feedback information transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device. It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, communication apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application.

Finally, it should be noted that the foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

**Claims**

1. A data management method, wherein the method comprises:

   obtaining a hot data set, wherein the hot data set comprises hot data statistics information of at least one terminal device;
   performing data affinity classification on the hot data set, to obtain a hot data subset corresponding to each of the at least one terminal device; and
   storing, into a first terminal, hot data in a first hot data subset other than hot data that has been stored in the first terminal, wherein the first hot data subset is a hot data subset corresponding to the first terminal.

2. The method according to claim 1, wherein the obtaining a hot data set specifically comprises:
   obtaining, through hot data identification and extraction processing, hot data statistics information corresponding to the first terminal, wherein the hot data set comprises the hot data statistics information corresponding to the first terminal.

3. The method according to claim 1 or 2, wherein the obtaining a hot data set further specifically comprises:
   receiving hot data statistics information corresponding to a second terminal, wherein the hot data set comprises the hot data statistics information corresponding to the second terminal.

4. The method according to any one of claims 1 to 3, wherein the performing data affinity classification on the hot data set, to obtain a hot data subset corresponding to each of the at least one terminal device specifically comprises:

   performing, for the first terminal, affinity classification on a plurality of hot data types comprised in the hot data set, to obtain a hot data type supported by the first terminal; and
   performing screening in the hot data set based on the hot data type supported by the first terminal, to obtain the first hot data subset corresponding to the first terminal, wherein the first hot data subset is a set of hot data that is in the hot data set and that corresponds to the hot data type supported by the first terminal.

5. The method according to claim 4, wherein the performing, for the first terminal, affinity classification on a plurality of data types comprised in the hot data set, to obtain a hot data type supported by the first terminal specifically comprises:

determining the plurality of hot data types comprised in the hot data set; and
determining, based on device diagnosis information of the first terminal, the hot data type supported by the first terminal in the plurality of hot data types.

6. The method according to claim 5, wherein the device diagnosis information comprises at least one of device registration information of the first terminal, information about an installed application, or information about an updated application.

7. The method according to any one of claims 1 to 3, wherein the performing data affinity classification on the hot data set, to obtain a hot data subset corresponding to each of the at least one terminal device specifically comprises:

determining a plurality of hot data types comprised in the hot data set;
receiving a hot data type supported by the second terminal, or obtaining, based on device diagnosis information received from the second terminal device, a hot data type supported by the second terminal; and
performing screening in the hot data set based on the hot data type supported by the second terminal, to obtain a second hot data subset corresponding to the second terminal, wherein the second hot data subset is a set of hot data that is in the hot data set and that corresponds to the hot data type supported by the second terminal.

8. The method according to any one of claims 1 to 7, wherein the storing, into a first terminal, hot data in a first hot data subset other than hot data that has been stored in the first terminal specifically comprises:

excluding hot data that has been locally stored in the first terminal from the first hot data subset to obtain a target hot data subset, wherein the target hot data subset comprises at least one piece of target hot data; and
storing the at least one piece of target hot data into the first terminal based on a storage address that is of the at least one piece of target hot data and that is indicated in the hot data set.

9. The method according to claim 8, wherein the storing the at least one piece of target hot data into the first terminal based on a storage address that is of the at least one piece of target hot data and that is indicated in the hot data set specifically comprises:
storing a part of target hot data in the target hot data subset into the first terminal based on a storage capability of the first terminal and a hot data priority.

10. A data management apparatus, wherein the apparatus comprises:

a hot data extraction module, configured to obtain a hot data set, wherein the hot data set comprises hot data statistics information of at least one terminal device;
a data affinity classification module, configured to perform data affinity classification on the hot data set, to obtain a hot data subset corresponding to each of the at least one terminal device; and
a cross-device data synchronization module, configured to store, into a first terminal, hot data in a first hot data subset other than hot data that has been stored in the first terminal, wherein the first hot data subset is a hot data subset corresponding to the first terminal.

11. The apparatus according to claim 10, wherein the hot data extraction module is specifically configured to:
obtain, through hot data identification and extraction processing, hot data statistics information corresponding to the first terminal, wherein the hot data set comprises the hot data statistics information corresponding to the first terminal.

12. The apparatus according to claim 10 or 11, wherein the hot data extraction module is further specifically configured to:
receive hot data statistics information corresponding to a second terminal, wherein the hot data set comprises the hot data statistics information corresponding to the second terminal.

13. The apparatus according to any one of claims 10 to 12, wherein the data affinity classification module is specifically configured to:

perform, for the first terminal, affinity classification on a plurality of hot data types comprised in the hot data set, to obtain a hot data type supported by the first terminal; and
perform screening in the hot data set based on the hot data type supported by the first terminal, to obtain the first hot data subset corresponding to the first terminal, wherein the first hot data subset is a set of hot data that is in the hot data set and that corresponds to the hot data type supported by the first terminal.

**14.** The apparatus according to claim 13, wherein the data affinity classification module is specifically configured to:

determine the plurality of hot data types comprised in the hot data set; and
determine, based on device diagnosis information of the first terminal, the hot data type supported by the first terminal in the plurality of hot data types.

**15.** The apparatus according to claim 14, wherein the device diagnosis information comprises at least one of device registration information of the first terminal, information about an installed application, or information about an updated application.

**16.** The apparatus according to any one of claims 10 to 12, wherein the data affinity classification module is specifically configured to:

determine a plurality of hot data types comprised in the hot data set;
receive a hot data type supported by the second terminal, or obtain, based on device diagnosis information received from the second terminal device, a hot data type supported by the second terminal; and
perform screening in the hot data set based on the hot data type supported by the second terminal, to obtain a second hot data subset corresponding to the second terminal, wherein the second hot data subset is a set of hot data that is in the hot data set and that corresponds to the hot data type supported by the second terminal.

**17.** The apparatus according to any one of claims 10 to 16, wherein the cross-device data synchronization module is specifically configured to:

exclude hot data that has been locally stored in the first terminal from the first hot data subset to obtain a target hot data subset, wherein the target hot data subset comprises at least one piece of target hot data; and
store the at least one piece of target hot data into the first terminal based on a storage address that is of the at least one piece of target hot data and that is indicated in the hot data set.

**18.** The apparatus according to claim 17, wherein the cross-device data synchronization module is specifically configured to:
store a part of target hot data in the target hot data subset into the first terminal based on a storage capability of the first terminal and a hot data priority.

**19.** An electronic device, wherein the electronic device comprises a processor, and the processor is coupled to a memory;

the memory is configured to store a computer program or instructions; and
the processor is configured to execute the computer program or the instructions stored in the memory, so that the electronic device performs the method according to any one of claims 1 to 9.

**20.** A computer-readable storage medium, comprising a program or instructions, wherein when the program or the instructions are run by a processor, the method according to any one of claims 1 to 9 is performed.

**09:05**

Application 1 | Application 2

First terminal

Second terminal

Third terminal

FIG. 1

110 — RF circuit

160

180 — Processor

Audio circuit

120 — Memory

Power supply — 190

170

I/O subsystem

130 — Another input device

Sensor — 150

Display — 140

Display panel — 141

Touch panel — 142

FIG. 2

A first terminal obtains a hot data set — 301

The first terminal performs data affinity classification on the hot data set, to obtain a hot data subset corresponding to each of at least one terminal device — 302

The first terminal stores, into the first terminal, hot data in a first hot data subset other than hot data that has been stored in the first terminal — 303

FIG. 3

Target hot data subset of the first terminal

Target hot data subset of the second terminal

Target hot data subset of the third terminal

Cross-device data synchronization

First terminal—First hot data subset
Second terminal—Second hot data subset
Third terminal—Third hot data subset
...

Data affinity classification

Hot data set S

Statistics information of hot data 1
Statistics information of hot data 2
Statistics information of hot data 3
Statistics information of hot data 4
Statistics information of hot data 5
...
Statistics information of hot data N

Hot data set S1 of a first terminal

Hot data set S2 of a second terminal

Hot data set S3 of a third terminal

...

FIG. 4

Cross-device data
synchronization | Synchronize hot data from another device in the hot data subset

Data affinity
classification | Perform data affinity classification based on different devices, to obtain a hot data subset

Hot data
extraction | Perform hot data extraction on a plurality of terminal devices, to obtain a hot data set

Hot data
identification | Mobile phone | Tablet | PC | Television | ...

FIG. 5

| A network device obtains a hot data set | — 601 |

| The network device performs data affinity classification on the hot data set, to obtain a hot data subset corresponding to each of at least one terminal device | — 602 |

| The network device locally stores hot data that is from another terminal device and that is in the hot data subset corresponding to each terminal device | — 603 |

FIG. 6

Apparatus 700

Hot data extraction module 701

Data affinity classification module 702

Cross-device data synchronization module 703

FIG. 7

800

Communication apparatus

802

Transceiver

803

801

Memory

Processor

FIG. 8

## INTERNATIONAL SEARCH REPORT

| International application No. |
| --- |
| **PCT/CN2021/116314** |

**A. CLASSIFICATION OF SUBJECT MATTER**

G06F 16/27(2019.01)i; G06F 16/2458(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, 百度学术: 华为, 王斌田, 韩风, 王涛, 热数据, 第一 3d (设备 or 终端), 共享, 保存, 同步, 数据类型, hot data, first, device, terminal, share, save, store, synchronization, data type

**C. DOCUMENTS CONSIDERED TO BE RELEVANT**

| Category* | Citation of document, with indication, where appropriate, of the relevant passages | Relevant to claim No. |
| --- | --- | --- |
| A | CN 109739442 A (ZHENGZHOU YUNHAI INFORMATION TECHNOLOGY CO., LTD.) 10 May 2019 (2019-05-10) description, paragraphs [0006]-[0039] | 1-20 |
| A | CN 110554999 A (HUAWEI TECHNOLOGIES CO., LTD.) 10 December 2019 (2019-12-10) entire document | 1-20 |
| A | CN 105447059 A (HUAWEI TECHNOLOGIES CO., LTD. et al.) 30 March 2016 (2016-03-30) entire document | 1-20 |
| A | CN 106412055 A (WUHAN QIMU TECHNOLOGY CO., LTD.) 15 February 2017 (2017-02-15) entire document | 1-20 |
| A | CN 111367996 A (SHENZHEN LAN-YOU TECHNOLOGY CO., LTD.) 03 July 2020 (2020-07-03) entire document | 1-20 |
| A | CN 110727406 A (SHENZHEN ZNV TECHNOLOGY CO., LTD. et al.) 24 January 2020 (2020-01-24) entire document | 1-20 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 November 2021** | **01 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/116314** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 109788025 A (BEIJING CENTURY INTERNET BROADBAND DATA CENTER CO., LTD.) 21 May 2019 (2019-05-21)<br>       entire document | 1-20 |
| A | US 2012209893 A1 (SAMSUNG ELECTRONICS CO., LTD.) 16 August 2012 (2012-08-16)<br>       entire document | 1-20 |
| A | US 2017147217 A1 (MACRONIX INTERNATIONAL CO., LTD.) 25 May 2017 (2017-05-25)<br>       entire document | 1-20 |
| A | WO 2017122922 A1 (CHUNGBUK NATIONAL UNIVERSITY INDUSTRY INDUSTRY ACADEMIC COOPERATION FOUNDATION) 20 July 2017 (2017-07-20)<br>       entire document | 1-20 |

Form PCT/ISA/210 (second sheet) (January 2015)

## INTERNATIONAL SEARCH REPORT
### Information on patent family members

International application No.

**PCT/CN2021/116314**

| Patent document cited in search report | | | Publication date (day/month/year) | Patent family member(s) | | | Publication date (day/month/year) |
|---|---|---|---|---|---|---|---|
| CN | 109739442 | A | 10 May 2019 | None | | | |
| CN | 110554999 | A | 10 December 2019 | None | | | |
| CN | 105447059 | A | 30 March 2016 | None | | | |
| CN | 106412055 | A | 15 February 2017 | None | | | |
| CN | 111367996 | A | 03 July 2020 | None | | | |
| CN | 110727406 | A | 24 January 2020 | None | | | |
| CN | 109788025 | A | 21 May 2019 | None | | | |
| US | 2012209893 | A1 | 16 August 2012 | KR | 20120093608 | A | 23 August 2012 |
| | | | | KR | 101795629 | B1 | 13 November 2017 |
| | | | | US | 8438195 | B2 | 07 May 2013 |
| US | 2017147217 | A1 | 25 May 2017 | CN | 106802767 | A | 06 June 2017 |
| | | | | TW | 201719663 | A | 01 June 2017 |
| | | | | TW | I625729 | B | 01 June 2018 |
| | | | | US | 10120605 | B2 | 06 November 2018 |
| WO | 2017122922 | A1 | 20 July 2017 | KR | 20170084400 | A | 20 July 2017 |
| | | | | KR | 101790701 | B1 | 21 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011191197